(19) Europäisches Patentamt

European Patent Office

Office européen des brevets

(11) Veröffentlichungsnummer: **0 672 697 A1**

(12) **EUROPÄISCHE PATENTANMELDUNG**

(21) Anmeldenummer: **95103162.4**

(22) Anmeldetag: **06.03.95**

(51) Int. Cl.⁶: **C08G 18/36**, //(C08G18/36, 101:00)

(30) Priorität: **17.03.94 DE 4409041**
          **31.05.94 DE 4418993**

(43) Veröffentlichungstag der Anmeldung:
   **20.09.95 Patentblatt 95/38**

(84) Benannte Vertragsstaaten:
   **AT BE CH DE DK ES FR GB IT LI NL SE**

(71) Anmelder: **BAYER AG**

   **D-51368 Leverkusen (DE)**

(72) Erfinder: **Scholl, Hans-Joachim, Dr.**
   **Am Feldrain 5**
   **D-51061 Köln (DE)**
   Erfinder: **Heinemann, Torsten, Dr.**
   **Andreas-Gryphius-Strasse 7**
   **D-51065 Köln (DE)**
   Erfinder: **Welte, Rainer, Dr.**
   **Kaiserstrasse 7**
   **D-51373 Leverkusen (DE)**

(54) **Verfahren zur Herstellung von Urethan-, Harnstoff- und Biuretgruppen aufweisenden Hartschaumstoffen und deren Verwendung.**

㊾ Im wesentlichen geschlossenzellige Urethan-, Harnstoff- und Biuretgruppen aufweisende Hartschaumstoffe mit hervorragender Haftung an festen Oberflächen werden durch Umsetzung von
   a) organischen Polyisocyanaten mit
   b) modifiziertem Rizinusöl in Gegenwart von
   c) Katalysatoren und
   d) Wasser und gegebenenfalls niedrigsiedenden Kohlenwasserstoffen als Treibmittel und gegebenenfalls in Gegenwart von
   e) Hilfsmitteln und/oder Zusatzstoffen,
hergestellt, wobei man als modifiziertes Rizinusöl Umsetzungsprodukte einer OH-Zahl zwischen 200 bis 500, vorzugsweise 350 bis 480, aus Rizinusöl, Aminen und/oder Hydroxyverbindungen verwendet.

EP 0 672 697 A1

Die Erfindung betrifft ein neues Verfahren zur Herstellung von im wesentlichen geschlossenzelligen Urethan-, Harnstoff- und Biuretgruppen aufweisenden Hartschaumstoffen mit hervorragender Haftung an festen Oberflächen und deren Verwendung als Dämmstoffe und/oder zur Verstärkung von mechanischen Konstruktionsteilen.

Verfahren zur Herstellung von im wesentlichen geschlossenzelligen Urethan-, Harnstoff- und Biuretgruppen aufweisenden Hartschaumstoffen sind allgemein bekannt.

Eine Übersicht zur Herstellung entsprechender Hartschaumstoffe wird beispielsweise im Kunststoff-Handbuch, Band VII, "Polyurethane", herausgegeben von G. Oertel, Seiten 267 ff. gegeben (Verlag Carl Hanser, München 1993).

Zur Herstellung derartiger Hartschaumstoffe werden üblicherweise aromatische Polyisocyanate mit höhermolekularen Polyolen, vorzugsweise Polyether- oder Polyesterpolyolen, in Gegenwart von Treibmitteln, Katalysatoren, Flammschutzmitteln und anderen Hilfs- und Zusatzstoffen zur Reaktion gebracht. Es ist ferner bekannt, anstelle von Polyether- oder Polyesterpolyolen Mischungen der genannten Aufbaukomponenten zu verwenden. Mitentscheidend für die Durchführung dieser Maßnahme war eine Kostensenkung, die durch Abmischung von teueren zur Herstellung von qualitativ hochwertigen PU-Hartschaumstoffen geeigneten Polyesterpolyolen mit preisgünstigen Polyetherpolyolen erzielt wird. Geeignete Polyesterpolyole mit niedriger Viskosität zur Herstellung von PU-Hartschaumstoffen mit guten mechanischen Eigenschaften werden beispielsweise in der DE-A-27 04 196 beschrieben.

Alle genannten Verfahrensweisen erfordern zwingend die Mitverwendung von FCKW-Treibmitteln, damit erwünschte Hartschaum-Stoffcharakteristiken wie z.B. Zähigkeit, Haftung an Deckschichten sowie verringerte Entflammbarkeit erzielt werden.

Nach DE-OS 39 10 100 ist die Mitverwendung von FCKW-Treibmitteln nicht erforderlich, wenn die dort beanspruchten Polyolmischungen zum Einsatz kommen. Gemeinsam ist den angeführten Verfahrensweisen die Mitverwendung von konventionellen Polyolsystemen auf petrochemischer Basis. Zur Minderung dieser Abhängigkeiten hat in der Polyurethan-Chemie die Verwendung spezieller Naturprodukte zunehmend technisches Interesse erlangt. Dies gilt insbesondere für den nachwachsenden Rohstoff Rizinusöl, dessen Einsatz in Hartschaumrezepturen allein schon aus Preisgründen sehr wünschenswert ist. Es hat daher nicht an Versuchen gefehlt, Rizinusöl polyolseitig mitzuverwenden.

So beschreibt US-PS 29 55 091 elastische Schaumstoffe, deren Polyolbasis aus einer Mischung konventioneller Polyole und Rizinusöl besteht.

Hartschäume unter Mitverwendung von Rizinusöl werden in J. Cell. Plast. 5, 364, (1969) behandelt. Neben dem zwingend vorgeschriebenen Einsatz von FCKW-Treibmitteln ermöglichen nur spezielle Rizinusöl/Polyol-Abmischungen die Herstellung praxisgerechter Hartschäume mit guter Dimensionsstabilität.

Der Erfindung lag daher die Aufgabe zugrunde, ein neues Verfahren zur Herstellung entsprechender Polyurethan-Hartschaumstoffe mit großer Zähigkeit, hervorragender Haftung und verringerter Entflammbarkeit zur Verfügung zu stellen,

das

a) mit modifiziertem Rizinusöl auskommt und

b) den Einsatz von FCKW-Treibmitteln vermeidet.

Wie überraschenderweise gefunden wurde, konnte diese Aufgabe mit dem nachstehend beschriebenen, erfindungsgemäßen Verfahren gelöst werden.

Gegenstand der Erfindung ist ein Verfahren zur Herstellung von im wesentlichen geschlossenenzelligen Urethan-, Harnstoff- und Biuretgruppen aufweisenden Hartschaumstoffen mit hervorragender Haftung an festen Oberflächen durch Umsetzung von

a) organischen Polyisocyanaten mit

b) modifiziertem Rizinusöl in Gegenwart von

c) Katalysatoren und

d) Wasser und gegebenenfalls niedrigsiedenden Kohlenwasserstoffen als Treibmittel und gegebenenfalls in Gegenwart von

e) Hilfsmitteln und/oder Zusatzstoffen,

dadurch gekennzeichnet, daß man als modifiziertes Rizinusöl Umsetzungsprodukte aus Rizinusöl, Aminen und/oder Hydroxyverbindungen verwendet, wobei die OH-Zahl der Umsetzungsprodukte 200 bis 500, vorzugsweise 350 bis 480, beträgt.

Erfindungsgemäß ist bevorzugt, daß

- die Umsetzung bei Kennzahlen von 100 bis 130 durchgeführt wird,

- als Amine Alkanolamine und/oder Polyalkylenamine verwendet werden,

- die im wesentlichen geschlossenzelligen Urethan-, Harnstoff- und Biuretgruppen aufweisenden Hartschaumstoffe Rohdichten von 20 bis 200 kg/m$^3$ aufweisen,

Gegenstand der Erfindung ist auch die Verwendung der erfindungsgemäßen, im wesentlichen geschlossenzelligen Urethan-, Harnstoff- und Biuretgruppen aufweisenden Hartschaumstoffe mit hervorragender Haftung an festen Oberflächen als Dämmstoffe und/oder zur Verstärkung von mechanischen Konstruktionsteilen.

Von erfindungswesentlicher Bedeutung ist die Verwendung der genannten speziellen modifizierten Rizinusöle.

Für die Durchführung des erfindungsgemäßen Verfahrens werden verwendet:

a) als Ausgangskomponenten aliphatische, cycloaliphatische, araliphatische, aromatische und heterocyclische Polyisocyanate, wie sie z.B. von W. Siegken in Justus Liebigs Annalen der Chemie, 362, Seiten 75 bis 136 beschrieben werden, beispielsweise solche der allgemeinen Formel

$$Q(NCO)_n$$

in der

n    2 bis 5, vorzugsweise 2 bis 3, und

Q    einen aliphatischen Kohlenwasserstoffrest mit 2 bis 18, vorzugsweise 6 bis 10 Kohlenstoffatomen, einen cycloaliphatischen Kohlenstoffrest mit 4 bis 15, vorzugsweise 5 bis 10 Kohlenstoffatomen, einen aromatischen Kohlenwasserstoffrest mit 6 bis 15, vorzugsweise 6 bis 13 Kohlenstoffatomen bedeuten, z.B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI") und Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate") insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

b) Ausgangskomponenten sind ferner Umsetzungsprodukte aus Rizinusöl, Aminen und/oder Hydroxyverbindungen, wobei die OH-Zahl der Umsetzungsprodukte 200 bis 500, vorzugsweise 350 bis 480 ist.

Als Amine werden vorzugsweise Produkte aus der Ethylenaminreihe wie z.B. Tetraethylenpentamin, Triethylentetramin oder Diethylentriamin verwendet. Vorzugsweise werden auch Amine des Typs Alkanolamine wie z.B. Mono-, Di- oder Triethanolamin eingesetzt. Die Umsetzung erfolgt gegebenenfalls unter Zusatz von Hydroxyverbindungen unter Mischung bei 40 bis 250°C, vorzugsweise 50 bis 180°C. Die Reaktionszeiten betragen abhängig von der gewählten Temperatur 1 bis 24 Stunden, vorzugsweise 2 bis 16 Stunden.

Umsetzungsprodukte aus Rizinusöl und Hydroxyverbindungen entstehen nach Art der an sich bekannten Ölumesterung (Alkoholyse) bei 100 bis 250°C, vorzugsweise 150 bis 200°C, wobei solange gerührt wird (abhängig von der gewählten Temperatur 2 Stunden bis 30 Minuten), bis die Mischung homogenisiert ist. Zur Beschleunigung der Reaktion werden katalytische Mengen basischer Metallverbindungen, z.B. Hydroxide, wie $Ca(OH)_2$ oder Alkoholate wie $NaOCH_3$ zugesetzt.

Als erfindungsgemäß einzusetzende Hydroxyverbindungen werden vorzugsweise solche mit 2 bis 6 Hydroxylgruppen der OH-Zahl 1000 bis 1900 verwendet.

Als Beispiele für derartige Verbindungen seien genannt:

Ethylenglykol, Diethylenglykol, Neopentylglykol, Glycerin, Trimethylolpropan, Trimethylolethan, Pentaerythrit und Sorbit.

Die jeweiligen Mengen an einzusetzenden Hydroxyverbindungen bestimmen sich durch den vorgegebenen OH-Zahl-Bereich der Umsetzungsprodukte.

c) Erfindungsgemäß werden die in der Polyurethanchemie an sich üblichen Katalysatoren mitverwendet.

d) Als Treibmittel wird in der Regel Wasser eingesetzt. Gegebenenfalls können niedrigsiedende Kohlenwasserstoffe als Treibmittel mitverwendet werden wie z.B. niedrig siedende Alkane wie Pentan, Cycloalkane wie Cyclopentan, ferner Alkenen o.ä.

Die unter b), c), d) und e) genannten Komponenten werden mit dem Polyisocyanat a) in solchen Mengen zur Reaktion gebracht, daß die Kennzahl zwischen 90 und 150, vorzugsweise 100 bis 130, liegt.

e) Gegebenenfalls werden Hilfs- und Zusatzmittel mitverwendet wie

a) oberflächenaktive Zusatzstoffe wie Emulgatoren und Schaumstabilisatoren,

b) Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Tris-chlorpropylphosphat, Diphenylkresylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von G. Oertel, Carl Hanser Verlag, München, 1993, z.B. auf den Seiten 104 bis 127 beschrieben.

Die Herstellung der im wesentlichen geschlossenzelligen Urethan-, Harnstoff- und Biuretgruppen aufweisenden Hartschaumstoffe mit hervorragender Haftung an festen Oberflächen erfolgt in an sich bekannter Weise. Die erfindungsgemäß erhältlichen Hartschaumstoffe weisen vorzugsweise Rohdichten von 20 - 200 $kg/m^3$ auf.

**Ausführungsbeispiele**

Herstellungsbeispiele für modifiziertes Rizinusöl
Basis: Rizinusöl, Brasil Nr. 1, OH-Zahl 160

**Beispiel 1**

930 g Rizinusöl und 184 g Glycerin werden unter Rühren mit 2 g $Ca(OH)_2$ versetzt und 30 Minuten bei 200°C gerührt. Man erhält eine gelbliche, homogenisierte Mischung der OH-Zahl 433.

**Beispiel 2**

465 g Rizinusöl und 79 g Diethanolamin werden 4 Stunden bei 150°C gerührt.
Man erhält eine gelbe, Klare Flüssigkeit, OH-Zahl: 363.

**Beispiel 3**

930 g Rizinusöl, 158 g Diethanolamin und 52 g Glycerin werden 4 Stunden bei 150°C gerührt. Gelbe, klare Flüssigkeit, OH-Zahl: 433.

**Beispiel 4**

465 g Rizinusöl, 47 g Tetramethylenpentamin und 55 g Glycerin werden 2 Stunden bei 150°C gerührt. Rötliche, klare Flüssigkeit, OH-Zahl: 420.

**Beispiel 5**

930 g Rizinusöl, 153 g Pentaethylenhexamin und 52 g Glycerin werden 14 Stunden bei 100°C gerührt. Rötliche, klare Flüssigkeit, OH-Zahl: 405.

**Beispiel 6**

930 g Rizinusöl und 261 g Triethanolamin werden 4 Stunden bei 150°C gerührt.
Klare, rötliche Flüssigkeit, OH-Zahl: 365.

**Beispiel 7**

930 g Rizinusöl, 335 g Trimethylolpropan und 2 g $Ca(OH)_2$ werden 30 Minuten bei 200°C gerührt. Klare, gelbe Flüssigkeit, OH-Zahl: 447.

**Beispiel 8**

1860 g Rizinusöl, 73 g Triethylentetramin, 95 g Tetraethylenpentamin und 469 g Trimethylolpropan werden 3 Stunden bei 150°C gerührt. Klare, gelbe Flüssigkeit, OH-Zahl: 435.

**Beispiel 9**

1860 g Rininusöl, 636 g Diethylenglykol und 4 g Ca(OH)$_2$ werden 1 Stunde bei 200°C gerührt. Klare, braune Flüssigkeit, OH-Zahl: 390.

**Beispiel 10**

1860 g Rizinusöl, 372 g Ethylenglykol und 4 g Ca(OH)$_2$ werden 1 Stunde bei 200°C gerührt. Klare, dunkelbraune Flüssigkeit, OH-Zahl: 435.

**Beispiel 11**

465 g Rizinusöl, 91 g Sorbit und 1 g Ca(OH)$_2$ werden 2 Stunden bei 200°C gerührt. Klare, gelbe Flüssigkeit, die nach einem Tag wachsartig erstarrt. OH-Zahl: 413.

**Beispiel 12**

930 g Rizinusöl, 224 g Triethanolamin und 52 g Glycerin werden 3 Stunden bei 180°C gerührt. Klare, gelbe Flüssigkeit, OH-Zahl: 430.

**Beispiel 13**

930 g Rizinusöl, 265 g Diethylenglykol, 61 g Sorbit und 2,6 g Ca(OH)$_2$ werden 60 Minuten bei 200°C gerührt. Man erhält eine gelbliche, homogenisierte Mischung der OH-Zahl 410.

Herstellung von Hartschäumen
Verschäumungsbeispiele (Mengen in Gew.-Teilen)

| | Beispiel 1 | Beispiel 2 | Beispiel 3 | Beispiel 4 | Beispiel 5 | Beispiel 6 | Beispiel 7 | Beispiel 8 |
|---|---|---|---|---|---|---|---|---|
| Katalysator 1 | 3,0 | 1,7 | 1,7 | 1,5 | 0,5 | 1,0 | 3,0 | 3,0 |
| Katalysator 2 | 0,5 | 0,8 | 0,8 | 0,5 | 0,5 | - | 0,5 | 0,5 |
| Stabilisator | 1,3 | 2,0 | 2,0 | 1,3 | 1,3 | 1,3 | 1,3 | 1,3 |
| Glycerin | - | - | - | 3,7 | - | - | - | - |
| Wasser | 4,8 | 2,3 | 1,7 | 4,8 | 4,8 | 4,8 | 3,0 | 3,0 |
| Cyclopentan | - | 10,2 | 10,2 | - | - | - | - | - |
| Flammschutzmittel | 10 | - | - | - | - | - | 10 | - |
| mod. Rizinusöl (Beispiel 1) | 81,6 | - | - | - | 40 | - | 82 | 82 |
| mod. Rizinusöl (Beispiel 2) | - | - | - | 78,3 | - | - | - | - |
| mod. Rizinusöl (Beispiel 3) | - | 98 | 102 | - | - | - | - | - |
| mod. Rizinusöl (Beispiel 4) | - | - | - | - | 40 | 82 | - | - |
| Isocyanat | 174 | 150 | 146 | 174,6 | 174 | 174 | 131 | 131 |
| Rührzeit (s) | 15 | 15 | 15 | 15 | 15 | 10 | 15 | 15 |
| Liegezeit (s) | 24 | 26 | 27 | 23 | 22 | 27 | 24 | 23 |
| Abbindezeit (s) | 67 | 63 | 65 | 61 | 65 | 68 | 61 | 60 |
| Oberfläche | zäh | zäh | zäh | zäh | zäh | zäh | zäh | zäh |
| Innen | zäh | zäh | zäh | zäh | zäh | zäh | zäh | zäh |
| Zellgröße | 1 | 1 | 1 | 1 | 1 | 1 | 1 | 1 |
| Zellstruktur | 1 | 1 | 1 | 1 | 1 | 1 | 1 | 1 |
| Haftung | gut | gut | gut | gut | gut | gut | gut | gut |
| Schrumpf RT | kein | kein | kein | kein | kein | kein | kein | kein |
| Rohdichte kg/m$^3$ | 29,4 | 26,6 | 30,4 | 21,8 | 31,6 | 29,8 | 44,4 | 43,2 |
| Kennzahl | 111 | 110 | 111 | 111 | 113 | 112 | 100 | 100 |

Zellgröße: 1-5; 1: kleine Zelle, 5: große Zelle
Zellstruktur: 1-5; 1: gut, 5: schlecht

EP 0 672 697 A1

Herstellung von Hartschäumen (Fortsetzung)
Verschäumungsbeispiele (Mengen in Gew.-Teilen)

| | Beispiel 9 | Beispiel 10 | Beispiel 11 | Beispiel 12 | Beispiel 13 | Beispiel 14 |
|---|---|---|---|---|---|---|
| Katalysator 1 | - | - | - | - | - | - |
| Katalysator 2 | 0,2 | 0,3 | 0,4 | 0,5 | 0,7 | 0,6 |
| Stabilisator | 1,5 | 1,5 | 1,5 | 1,5 | 1,5 | 1,5 |
| Glycerin | - | - | - | - | - | - |
| Wasser | 4,0 | 2,0 | 4,0 | 4,0 | 4,0 | 2,0 |
| Cyclopentan | - | 7,0 | - | - | - | 8,0 |
| Flammschutzmittel | 10 | - | 10,0 | 10,0 | 10,0 | 10,0 |
| mod. Rizinusöl (Beispiel 12) | 85 | 95 | - | - | - | - |
| mod. Rizinusöl (Beispiel 9) | - | - | 85 | - | - | - |
| mod. Rizinusöl (Beispiel 10) | - | - | - | 85 | - | - |
| mod. Rizinusöl (Beispiel 7) | - | - | - | - | 85 | 85 |
| Isocyanat | 160 | 137 | 155 | 165 | 168 | 135 |
| Rührzeit (s) | 10 | 10 | 10 | 10 | 10 | 10 |
| Liegezeit (s) | 65 | 61 | 48 | 63 | 64 | 67 |
| Abbindezeit (s) | 156 | 170 | 160 | 162 | 170 | 158 |
| Oberfläche | zäh | zäh | zäh | zäh | zäh | zäh |
| Innen | zäh | zäh | zäh | zäh | zäh | zäh |
| Zellgröße | 1 | 1 | 1 | 1 | 1 | 2 |
| Zellstruktur | 1 | 1 | 1 | 1 | 1 | 1 |
| Haftung | gut | gut | gut | gut | gut | gut |
| Schrumpf RT | kein | kein | kein | kein | kein | kein |
| Rohdichte kg/m³ | 35,6 | 40,2 | 38,8 | 38,1 | 38,1 | 34,2 |
| Kennzahl | 110 | 110 | 110 | 110 | 110 | 110 |

Zellgröße: 1-5; 1: kleine Zelle, 5: große Zelle
Zellstruktur: 1-5; 1: gut, 5: schlecht

Katalysator 1: Dimethylbenzylamin
Katalysator 2: Dimethylcyclohexylamin
Stabilisator: Tegostab® 8421, Polyethersiloxan der Fa. Goldschmidt, Essen
Flammschutzmittel: Diphenylkresylphosphat
Isocyanat: Rohes MDI (Desmodur® 44V20, Bayer AG)

## Patentansprüche

1. Verfahren zur Herstellung von im wesentlichen geschlossenzelligen Urethan-, Harnstoff- und Biuretgruppen aufweisenden Hartschaumstoffen mit hervorragender Haftung an festen Oberflächen durch Umsetzung von

    a) organischen Polyisocyanaten mit

    b) modifiziertem Rizinusöl in Gegenwart von

    c) Katalysatoren und

    d) Wasser und gegebenenfalls niedrigsiedenden Kohlenwasserstoffen als Treibmittel und gegebenenfalls in Gegenwart von

    e) Hilfsmitteln und/oder Zusatzstoffen,

dadurch gekennzeichnet, daß man als modifiziertes Rizinusöl Umsetzungsprodukte aus Rizinusöl, Aminen und/oder Hydroxyverbindungen verwendet, wobei die OH-Zahl der Umsetzungsprodukte 200 bis 500, vorzugsweise 350 bis 480, beträgt.

2.    Verfahren gemäß Anspruch 1, dadurch gekennzeichnet, daß die Umsetzung bei Kennzahlen von 100 bis 130 durchgeführt wird.

3.    Verfahren gemäß Anspruch 1 und 2, dadurch gekennzeichnet, daß als Amine Alkanolamine und/oder Polyalkylenamine verwendet werden.

4.    Verfahren gemäß Anspruch 1 bis 3, dadurch gekennzeichnet, daß als Hydroxyverbindungen 2 bis 6 Hydroxylgruppen aufweisende Verbindungen der OH-Zahl 1000 bis 1900 verwendet werden.

5.    Verfahren gemäß Anspruch 1 bis 4, dadurch gekennzeichnet, daß die im wesentlichen geschlossenzelligen Urethan-, Harnstoff- und Biuretgruppen aufweisenden Hartschaumstoffe Rohdichten von 20 bis 200 kg/m$^3$ aufweisen.

6.    Verwendung der gemäß Anspruch 1 bis 5 erhältlichen, im wesentlichen geschlossenzelligen Urethan-, Harnstoff- und Biuretgruppen aufweisenden Hartschaumstoffe als Dämmstoffe und/oder zur Verstärkung von mechanischen Konstruktionsteilen.

| | Europäisches Patentamt | EUROPÄISCHER RECHERCHENBERICHT | Nummer der Anmeldung EP 95 10 3162 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB-A-882 949 (I.C.I.)<br>* Ansprüche 1-3,9 *<br>* Seite 2, Zeile 76 - Zeile 102 *<br>* Beispiele 1-4 *<br>--- | 1-6 | C08G18/36<br>//(C08G18/36,<br>101:00) |
| X | GB-A-893 746 (I.C.I.)<br>* Ansprüche 1-5 *<br>* Seite 1, Zeile 78 - Seite 2, Zeile 49 *<br>* Beispiele 1-4 *<br>--- | 1-6 | |
| A | US-A-3 248 349 (J.F. SZABAT ET AL.)<br>* Ansprüche 1,2 *<br>* Spalte 2, Zeile 10 - Zeile 55 *<br>* Spalte 3, Zeile 48 - Zeile 61 *<br>* Spalte 4, Zeile 22 - Zeile 40 *<br>--- | 1 | |
| A | US-A-3 637 539 (WOLFF PER ET AL)<br>* Ansprüche 1-5 *<br>* Spalte 2, Zeile 61 - Zeile 70 *<br>* Spalte 4, Zeile 38 - Zeile 65 *<br>----- | 1 | |

**RECHERCHIERTE SACHGEBIETE (Int.Cl.6)**

C08G

Der vorliegende Recherchenbericht wurde für alle Patentansprüche erstellt

| Recherchenort | Abschlußdatum der Recherche | Prüfer |
|---|---|---|
| DEN HAAG | 15.Juni 1995 | Van Puymbroeck, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P04C03)